# EUROPEAN PATENT APPLICATION

(11) **EP 0 792 735 A1**
(43) Date of publication of application: **03.09.1997**
(21) Application number: 96200555.9
(22) Date of filing: 01.03.1996
(51) Int. Cl.: B29C 65/02, B65B 51/10

(54) **Method for sealing the mouth of a flexible sachet or pouch**

(71) Applicant: THE PROCTER & GAMBLE COMPANY, Cincinnati, Ohio 45202 (US)
(72) Inventor: De Coninck, Robert Alois, 9308 Aalst (BE); Hauben, Luc Marie, 2800 Mechelen (BE)
(74) Representative: Gibson, Tony Nicholas

(57) **Abstract**

The invention relates to a method for sealing the mouth of a polymeric sachet or pouch 1, the method comprising the steps of:
(i) forming the sachet or pouch with an open ended mouth 17, 27;
(ii) filling the sachet or pouch through the mouth;
(iii) sealing the mouth across substantially its whole width by the application of heat to form a first seal 30; and
(iv) sealing the mouth across substantially its whole width by the application of ultrasonic energy to form a second seal 40.

## Description

The invention relates to a method for sealing the mouth of a flexible sachet or pouch.

Flexible sachets and pouches are used for packing liquid products such as dish washing liquids, shampoos as well as other products for domestic use. It is important that the sachet or pouch is strong enough to be handled without tearing or leaking until the end-user opens the sachet or pouch. In particular it is important that the sachet or pouch does not leak in the region of the seal.

A conventional sealing process provides a method for sealing the mouth of a flexible sachet or pouch, the method comprising the steps of:
(i) forming the sachet or pouch with an open ended mouth;
(ii) filling the sachet or pouch through the mouth;
(iii) sealing the mouth across its whole width by the application of heat to form a seal.

US-A-4 866 914, granted on 19th September 1989, discloses a problem with the conventional sealing process of poor sealing of liquid-filled pouches at the mouth. The pouch arrives at a sealing station between a vibrator which is an ultrasonic sealing unit operating at 20kHz, and a support member. The ends of the mouth are heat sealed beforehand to avoid product leaking.

JP-58/156606, published on 19th October 1983, is a utility model which addresses a similar problem, also by use of ultrasonics. The automatic sealing device disclosed in this reference is a horizontal machine which imparts ultrasonic vibrations to the mouth of the pouch which is then fused together.

GB-A-2 248 796, published 22nd April 1992, relates to a method for the manufacture of filled pouches from films using ultrasonic welding whereby the welding tool also cuts adjacent sachets apart. A vertical form/fill process is disclosed.

The problem associated with the ultrasonic sealing method on a vertical form/fill machine is that it is difficult to provide wide seals across several adjacent lanes of pouches or sachets. Consequently the filling rate of sachets is limited.

The present invention aims to provide a sealing method for which filling machine speed is not limited by the need to avoid product splashing or foaming, and which can be used with filling nozzles which are not specifically designed to avoid dripping, and consequent contamination.

The object of the present invention is to provide a sealing method for a sachet or pouch which, provides initial leak tightness via conventional heat sealing and enhances the seal quality as the ultrasonic waves provide tight sealing through the surface, even where the surface is contaminated by product.

### Summary of the Invention

The object is achieved by sealing the mouth across substantially its whole width by the application of ultrasonic energy. After filling through the open mouth end of the pouch a first sealing step closes the mouth using existing heat seal technology to form a first seal. A second sealing step is then performed on the mouth end of the pouch using ultrasonics.

### Brief Description of the Drawings

Figure 1 shows a preform for a flexible sachet made according to the present invention.

Figure 2 shows a preform for a flexible sachet made according to an alternative embodiment of the present invention.

Figure 3 shows a filled flexible sachet.

### Detailed Description of the Invention

Flexible sachets and pouches useful in he present invention may be of any shape, but are most commonly square or rectangular. Square or rectangular sachets and pouches are generally preformed by sealing and, optionally folding, along three edges. The remaining, unsealed edge provides an open ended mouth for filling. The preform may consist of two separate polymeric films which are sealed together along three edges. Alternatively the preform may consist of a single piece of polymeric film which is first folded, the fold forming a first edge, and then sealed along two other edges. In a further alternative embodiment a length of polymeric film is first folded and sealed along its length to form a tube. The tube is then cut into predetermined lengths and one end of the tube is sealed to form the preform.

The preform is then filled using conventional filling equipment.

In a particularly preferred embodiment of the invention the forming of the preform, and the filling are carried out immediately sequentially on one machine, or on adjacent machines. This is known as "form-fill". Both vertical form-fill machines and horizontal form-fill machines are sold by equipment manufacturers. Vertical form-fill machines being preferred for use in the present invention in particular with liquids because this allows for multiple lanes in a side-by-side configuration, and consequently higher filling rates.

The sachets or pouches may be made from any suitable flexible material, in particular polymeric film, including high- or low-density polyethylene (HDPE; LDPE), polyethylene terephthalate (PET), polypropylene (PP), polyamide, polybutadiene, polybutylene polymers and copolymers, copolymers of ethylene and vinyl esters, polymers of vinyl chloride, and polymers of styrene. The term "polymeric" as used herein refers to copolymers and terpolymers as well as to homopolymers.

Furthermore laminated materials may be used. The only essential requirement of a laminate is that at least one side of the laminate consists of a polymeric film which is suitable to be heat sealed and ultrasonically welded.

Particularly preferred for use in the present invention are laminated film comprising PET, polyamide, aluminium or paper in the outer layer, and polyethylene in the inner layer.

The sachets or pouches preferably have a capacity of less than 1 litre, and preferably 500 ml or less.

It is a particular advantage of the present invention that filling can be carried on high speed machines. By "high-speed" it is meant herein that the filling rate is at least fifty pouches per minute, per filling lane, and up to about eight lanes side-by-side on a single machine.

Ultrasonic sealing techniques are generally carried out using a horn and anvil. The horn is vibrated preferably at a frequency of from 10 kHz to 70kHz, preferably from 20kHz to 40kHz with an power output of up to about 5 kW. A suitable apparatus is a Branson model number 23187. Pressure is an important parameter. Too much causes the parts to vibrate as an integral structure with no heating. Too little does not provide enough contact heating or friction.

The geometry of the anvil has to be designed in order to concentrate the vibrations into the film and thus heat up the sealant layers. This results in a limited maximum seal width, and therefore it is preferred that individual anvil/horn units per lane are selected. The design of the total system has to guarantee an exact matching (even pressure) of the horn onto the anvil.

Typical specific pressures used to give a robust seal are from 50 to 250 N/cm² depending on the film properties. Typical sealing times range from 200 to 400 milliseconds.

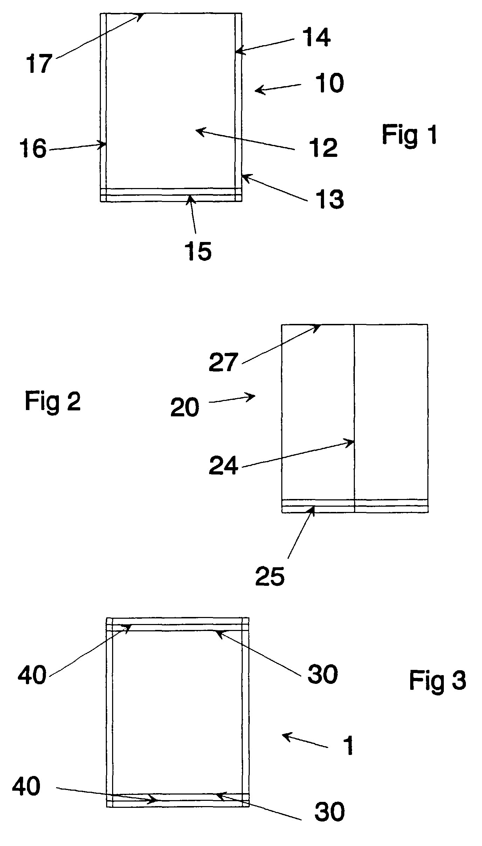

Figure 1 shows a preform for a polymeric sachet made according to the present invention. The preform 10 comprises front and back films 12, 13 which are sealed together along three edges 14, 15, 16 and which has a open mouth 17 for filling.

Figure 2 shows a preform for a polymeric sachet made according to an alternative embodiment of the present invention. The preform 20 comprises a single film which has been formed into a tube and sealed along one edge 24. The tube is sealed along its bottom edge 25 and has an open mouth 27 for filling.

Figure 3 shows a filled polymeric sachet 1 formed from either perform 10 or 20 which has been sealed sequentially across the open mouth 17, 27 by means of a heat seal 30 and a ultrasonic seal 40.

## Claims

1. A method for sealing the mouth of a flexible sachet or pouch (1), the method comprising the steps of:
(i) forming the sachet or pouch with an open ended mouth (17, 27);
(ii) filling the sachet or pouch through the mouth;
(iii) sealing the mouth across substantially its whole width by the application of heat to form a first seal (30); and characterised in that the method further comprises the step of :
(iv) sealing the mouth across substantially its whole width by the application of ultrasonic energy to form a second seal (40).

2. A method according to claim 1 wherein the sachet or pouch (1) with the open ended mouth (17) is formed by:
(i)(a) placing two polymeric films (12, 13) adjacent to each other; and,
(i)(b) heat sealing three edges (14, 15, 16).

3. A method according to claim 2 wherein steps (i) and (ii) are carried out immediately sequentially on a vertical form-fill machine.

4. A method according to claim 3 wherein the rate of filling is at least fifty sachets or pouches per minute, per filling lane.

5. A method according to claim 1 wherein sachet or pouch (1) is made from a flexible laminated material comprising at least two layers: a first layer being of a material selected from the group consisting of polyethylene terephthalate, polyamide, aluminium or paper; and a second layer consisting of a polymeric material which is polyethylene.
